# EUROPÄISCHE PATENTSCHRIFT

(11) **EP 3 971 348 B1**
(45) Veröffentlichungstag und Bekanntmachung des Hinweises auf die Patenterteilung: **25.06.2025**
(21) Anmeldenummer: 21000236.6
(22) Anmeldetag: 18.08.2021
(51) Int. Cl.: E01B 2/00, E01B 25/28, E01C 1/00, G08G 1/01

(54) **FÜHRUNGS-SYSTEM FÜR FAHRZEUGE**
CONTROL SYSTEM FOR VEHICLES
SYSTÈME À CONDUIT DES VOITURES

(43) Veröffentlichungstag der Anmeldung: 23.03.2022
(73) Patentinhaber: Friedrich, Johann, 82954 Sauerlach (DE)
(72) Erfinder: Friedrich, Johann, 82954 Sauerlach (DE)
(74) Vertreter: Straus, Alexander

(56) Entgegenhaltungen:
- EP-A1- 3 073 459
- WO-A1-94/26573
- WO-A1-95/29822
- DE-A1- 10 020 593
- DE-A1- 10 200 002
- DE-A1- 102018 208 910
- JP-A- 2006 089 970
- US-A1- 2015 179 062

## Beschreibung

### Gebiet der Technik

Die vorliegende Erfindung betrifft die Kapazität von *Trassen des motorisierten Landverkehrs.* Der motorisierte Landverkehr umfasst Eisenbahn-Trassen und Straßen-Trassen.

### Stand der Technik

Die Kapazität von *Eisenbahn-Trassen* ist auf Grund des Führungs-Systems für Schienenfahrzeuge mit Stellwerken, Weichen und Haltestellen sowie auf Grund der langen Bremswege von Schienenfahrzeugen relativ begrenzt. Sie lässt sich aus physikalischen Gründen auch mit einer Digitalisierung der Betriebsabläufe kaum steigern. Deshalb ist die erforderliche Kapazität für die gewünschte Verkehrsverlagerung "von der Straße auf die Schiene" auch in Zukunft kaum bereitzustellen.

Die Kapazität von *Straßen-Trassen* hängt von der möglichen DurchschnittsGeschwindigkeit der Straßenfahrzeuge ab. Diese wird durch Staus, Geschwindigkeitsbegrenzungen und Verkehrsampeln, sowie heterogene Fahrzeug- Geschwindigkeiten begrenzt und kann in vielen Fällen nicht erhöht werden.

Die JP 2006 089 970 A1 zeigt ein gattungsgemäßes Führungs-System bei dem Straßen- und Schienenfahrzeuge auf einer Fahrbahntrasse gemeinsam fahren können. Es werden unter anderem autonome Fahrzeuge (Busse) an Stellen, die eine Gabelung zwischen einer Straße und einer Schiene darstellen, in das Trassen/Fahrbahnbalken-System ein- bzw. wieder herausgeführt.

### Aufgabe der Erfindung

Aufgabe der Erfindung ist es, die Kapazität von Eisenbahn-Trassen zu vervielfachen und Straßen-Trassen zu entlasten, um die wachsenden Probleme des Landverkehrs zukunftssicher zu lösen.

### Lösung der Aufgabe

Zur Erhöhung der Kapazität von Bahn-Trassen werden Bahngleise mit Fahrbahnbalken zu einem kreuzungsfreien und leistungsfähigen Fahrbahnnetz weiterentwickelt und - zur Entlastung der Straße - in das Straßennetz integriert sowie mit einem staufreien, sicheren und automatischen Führungs-System für spurgeführte autonome Fahrzeuge versehen.

### Beschreibung der Zeichnungen

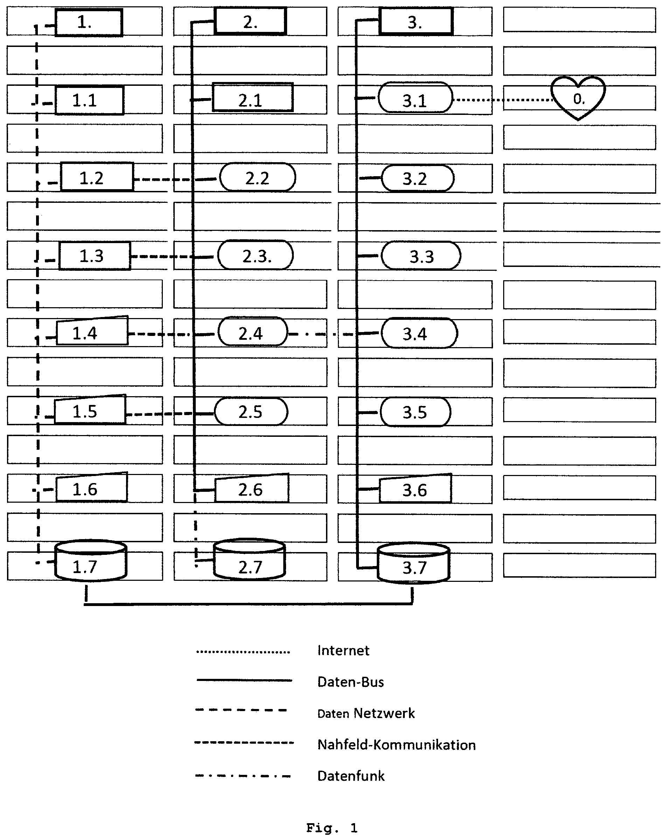

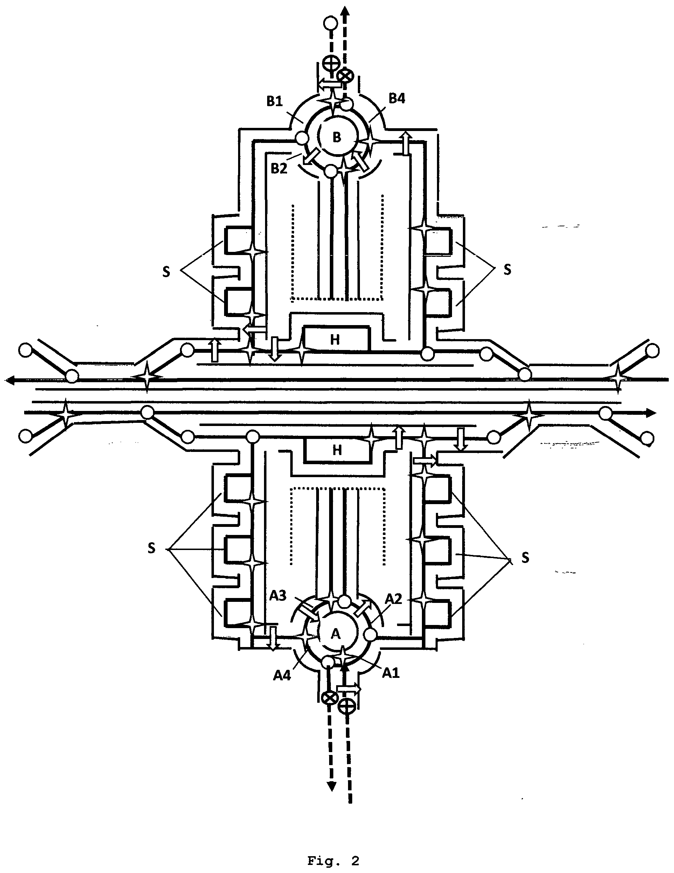

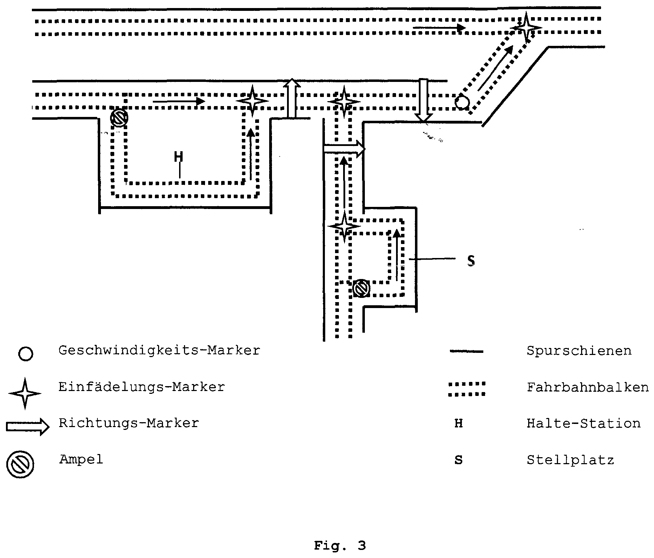

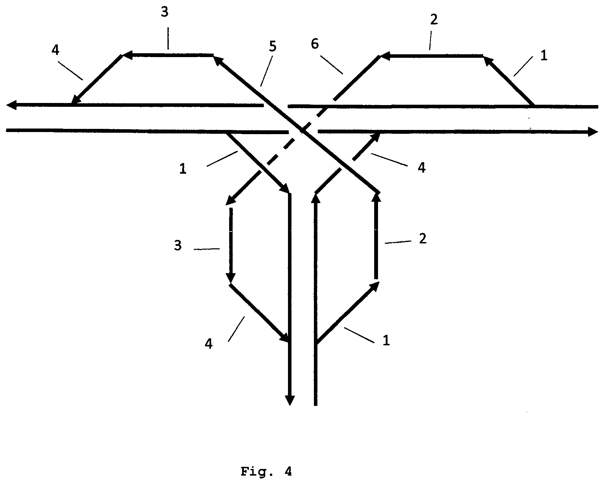

- **Fig. 1**: zeigt die internen und externen Kommunikationsnetze der HauptKomponenten des Führungs-Systems.
**Kommunikationsnetze**
   ················· Internet
   - Daten-Bus
   - - - - - Daten-Netzwerk
   -------- Nahfeld-Kommunikation
   - · - · - · Datenfunk
**Hauptkomponenten** 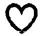
   0. *Kunden*
   0.1 Privat-Fahrzeuge
   0.2 Pool-Fahrzeuge
   *1.* *Fahrbahnnetz*
   1.1. Geschwindigkeits-Marker mit Umfeld-Sensoren
   1.2. Spurführungs-Marker
   1.3. Stromversorgungs-Marker
   1. 4. Navigations-Marker
   1.5. Ortungs-Marker
   1.6. Baustellen-Modul
   1.7. Bauhöfe
   *2.* *Fahrzeuge*
   2.1. Check-out-Modul
   2.2. Spur führungs-Modul
   2.3. Strom-Modul
   2.4. Navigations-Modul
   2.5. Kollisionsschutz-Modul
   2.6. Service-Modul
   2.7. System-Werkstätten
   *3.* *Verkehrs-Zentrale*
   3.1. Kunden-Rechner
   3.2. Fahrzeug-Pool Rechner
   3.3. Strom-Einkaufs- Rechner
   3.4. Planungs- Rechner
   3.5. Überwachungs- Rechner
   3.6. Kommunikations- Rechner
   3.7. Software-Zentrum
- **Fig. 2**: zeigt die kreuzungsfreie Verknüpfung der Richtungs-Fahrbahnen des Fahrbahnnetzes mit dem Straßennetz und den Wechsel von einer Richtungs-Fahrbahn auf die Gegen-Richtungs-Fahrbahn sowie die Positionen ihrer Marker und Spurschienen,
○ Geschwindigkeits-Marker 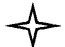
Einfädelungs-Marker 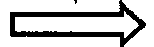
Richtungs-Marker
········· Tunnel-Rand 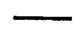
Spurschienen 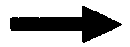
Richtungs-Fahrbahn 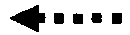
Straße
H Haltestelle, Station
S Stellplatz, Parkplatz
A Kreisverkehr mit
4 Quadranten A1-A4
B Kreisverkehr mit
4 Quadranten B1-B4
⊕ Zufahrts-Marker mit Schranke
⊗ Abfahrts-Marker zur Straße
- **Fig. 3**: zeigt Details der Lage von Fahrbahnbalken und Spurschienen an Stationen und Stellplätzen mit Positionen von Markern und digitalen Ampeln,
○ Geschwindigkeits-Marker 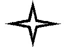
Einfädelungs-Marker 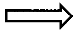
Richtungs-Marker 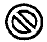
Digitale Ampel 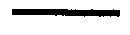
Spurschienen 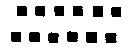
Fahrbahnbalken
H Haltestelle, Station
S Stellplatz, Parkplatz
- **Fig. 4**: zeigt Fahrbahn-Abschnitte für die kreuzungsfreie Verzweigung eines Fahrbahnnetzes.
1 Abzweigungs-Abschnitt nach rechts
2 Verzögerungs-Abschnitt
3 Beschleunigungs-Abschnitt
4 Einfädelungs-Abschnitt
5 Brücken-Abschnitt
6 Tunnel-Abschnitt
- **Fig.5**: zeigt eine kombinierte Spurführungs-Einrichtung für autonome Fahrzeuge.
41 Fahrbahnbalken
42 Spurführungs-Schiene, Spurführungs-Information
43 lenkbares Rad eines Fahrzeugs
44 Spurführungsrad eines Fahrzeugs links abgesenkt = aktiviert
45 Spurführungsrad eines Fahrzeugs rechts abgehoben = deaktiviert
46 Aktuator
47 Aktuator-Steuerung
48 Spurführungs-Sensor

Im Folgenden werden mit Bezug auf die Zeichnungen die Prinzipien zur Lösung der Aufgabe und die beanspruchten Verfahren für Kapazität, Staufreiheit, Sicherheit und Navigation erläutert.

### Kapazität

Durch ein kreuzungsfreies Fahrbahnnetz aus Fahrbahnbalken an Bahngleisen und seine Integration mit dem Straßennetz, seinen Parkplätzen, Stationen und Stellplätzen ergeben sich *Einfädelungspunkte* und *Ausfädelungspunkte.*

Einfädelungspunkte sind die Engstellen und Ausfädelungspunkte sind die Navigationspunkte des neuartigen Fahrbahnnetzes aus Fahrbahnbalken an Bahngleisen.

Die Kapazität jeder Fahrbahn hängt von der Zahl der möglichen Fahrzeug-Vorbeifahrten während eines bestimmten Zeitraums an einem Einfädelungspunkt ab, sie werden "Slots" genannt.

Jeder Slot wird durch eine Nummer, seinen genauen Zeitraum innerhalb eines Tages - die sog. Slot-Zeit - und seinen aktuellen Belegungs-Zustand beschrieben.

Die Dauer einer Vorbeifahrt hängt von der Summe aus der Dauer der Vorbeifahrt des Fahrzeugs entsprechend der Länge seiner Aufbauten und vom erforderlichen zeitlichen Mindest-Abstand zwischen den Fahrzeugen ab. Der zeitliche Mindest-Abstand zwischen Fahrzeugen hängt von der Art der Fahrzeug-Führung ab.

### Zentrale Fahrzeug-Führung (Schienenfahrzeuge)

Bei einem Zug mit einer Länge von z.B. 200 Metern und einer Geschwindigkeit von 120 km/h beträgt die Dauer der Vorbeifahrt des Zuges 6 Sekunden. Wenn der zeitliche Mindest-Abstand zwischen zwei Zügen für die Bildung einer Weichenstraße oder für einen "Strecken-Halt" zum Beispiel 60 Sekunden benötigt, beträgt die Gesamtdauer der Vorbeifahrtzeit eines Zuges an einem Einfädelungspunkt insgesamt 66 Sekunden und damit die Zahl der Slots 55 pro Stunde.

Bei etwa 2 Sitzplätzen pro Fahrzeugmeter, d.h. 400 Sitzplätzen pro Zug, ergibt sich bei 55 Slots eine maximale Transportkapazität von 21.800 Passagieren pro Stunde und Einfädelungspunkt.

### Autonome Fahrzeugführung (Straßenfahrzeuge)

Bei einem Bus mit der Länge von z.B. 20 m und einer Geschwindigkeit von 120 km/h beträgt die Dauer der Vorbeifahrt des Busses an einem Einfädelungspunkt 0,6 Sekunden und der zeitliche Sicherheitsabstand zwischen zwei Bussen 1,8 Sekunden. Dies ist der für jede Geschwindigkeit gesetzlich vorgeschriebene Sicherheitsabstand zwischen manuell geführten Straßenfahrzeugen ("halber Tacho").

Auf der neuartigen Fahrbahn sind "Strecken-Halte" grundsätzlich nicht vorgesehen. Angehalten wird nur auf Stationen, Parkplätzen und Stellplätzen. Damit beträgt bei Non-Stopp-Fahrten die Gesamtdauer der Vorbeifahrt eines Busses an einem Einfädelungspunkt insgesamt 2,4 Sekunden und damit die Zahl der Slots 1.500 pro Stunde.

Bei etwa 2 Sitzplätzen pro Fahrzeugmeter, d.h. 40 Sitzplätzen pro Bus, ergibt sich bei 1.500 Slots eine maximale Transportkapazität von 60.000 Passagieren pro Stunde und Einfädelungspunkt.

Bei obigen Beispielen ermöglicht eine autonome Fahrzeugführung gegenüber einer zentralen Fahrzeugführung - an einem Einfädelungspunkt - nahezu eine Verdreifachung der Transport-Kapazität und eine um den Faktor 27,5 höhere Taktrate.

Dadurch kann im Landverkehr das Verkehrsangebot der Verkehrsnachfrage bedarfsgerecht angepasst werden, die Kosten und Zeiten können reduziert und die Wettbewerbsfähigkeit einer Volkswirtschaft nachhaltig gesichert werden.

### Staufreiheit

Um den Verkehr auf dem neuartigen Fahrbahnnetz staufrei durchführen zu können, werden alle anfallenden Verkehrswünsche von zuständigen Verkehrszentren erfasst, ihre Fahrten werden konfliktfrei in den Verkehrsfluss eingeplant, ihre Starts entsprechend freigegeben und die Durchführung jeder Fahrt mit Hilfe von Ortungs-Markern und Einfädelungs-Markern überwacht.

Dazu legen Verkehrszentralen für jeden ihrer Fahrbahn-Abschnitte in Abhängigkeit von den Betriebserfordernissen und den Umfeld- Gegebenheiten die jeweiligen Sollgeschwindigkeiten fest und übermitteln diese den Geschwindigkeits-Markern an der Fahrbahn.

Diese Geschwindigkeits-Informationen werden von autonomen Fahrzeugen bei ihrer Vorbeifahrt gelesen und exakt eingehalten. Dadurch sind die Durchfahrtzeiten für jeden Fahrbahn-Abschnitt und die Vorbeifahrtzeiten bei Einfädelungspunkten genau planbar. Verspätungen während einer Fahrt gibt es praktisch nicht.

Sobald eine Verkehrs-Zentrale den Verkehrswunsch eines Kunden mit Ort der Zufahrt zur Fahrbahn und Ort der Abfahrt von der Fahrbahn sowie mit gewünschter Abfahrtszeit und verfügbarem Fahrzeug erfasst hat, bestimmt sie die erforderliche Route zwischen Zufahrt und Abfahrt und ermittelt alle Einfädelungspunkte auf der Route.

Sie errechnet an Hand der gewünschten Abfahrtszeit und an Hand der planbaren Durchfahrtzeiten zwischen den Einfädelungspunkten die Vorbeifahrtzeiten für alle betroffenen Einfädelungspunkte.

Dann prüft sie, ob alle mit Vorbeifahrtzeiten korrespondierenden Slot-Zeiten frei sind. Wenn dies der Fall ist, werden alle diese Slots solange für andere Fahrten blockiert, bis die betroffenen Einfädelungspunkte die vorbeifahrt des Kunden-Fahrzeugs gemeldet haben.

Wenn bei der Prüfung jedoch festgestellt wird, dass Slots von Einfädelungspunkten bereits belegt sind, wird die gewünschte Abfahrtszeit von der Verkehrs-Zentrale solange verschoben, bis die jeweilige Fahrt konfliktfrei durchgeführt werden kann. Sollte die Abfahrtszeit jedoch nicht entsprechend verschoben werden können, so wird weiter geprüft, ob
- eine andere Route über konfliktfreie Einfädelungspunkte möglich ist, oder
   die Zahl der Fahrten reduziert werden kann z.B. durch den Einsatz eines Fahrzeugs mit höherer Transport-Kapazität, oder
   die Zahl der Slots erhöht werden kann z.B. durch eine Verringerung des gesetzlichen Sicherheitsabstandes von 1,8 Sekunden auf einen elektronischen Sicherheitsabstand von 0,9 Sekunden zusammen mit einer Erhöhung der Soll-Verzögerung von z.B. 4 m/s² auf 8 m/s².

Sobald Route und Abfahrtszeit sowie zeitlicher Sicherheitsabstand und Art des Fahrzeugs für die gewünschte Fahrt feststehen, übermittelt die Verkehrs-Zentrale dem betroffenen Kunden-Fahrzeug diese Informationen und gibt gleichzeitig seine Fahrt frei.

### Sicherheit

Zur Erfassung von unvorhersehbaren Störungen sowie zur Vermeidung von Auffahrunfällen werden im Bremswegabstand auf der Fahrbahn *Ortungspunkte* mit Markern installiert. Diese Marker erfassen und speichern die Vorbeifahrtzeiten aller Fahrzeuge und melden sie falls erforderlich einer Verkehrszentrale.

Der Bremsweg autonomer Fahrzeuge hängt von der Sollgeschwindigkeit und der Sollverzögerung ab. Bei einer Sollgeschwindigkeit von 120 km/h und einer Soll-Verzögerung von z.B. 4 m/s² beträgt der Bremsweg und damit der Abstand zwischen Ortungspunkten ca. 500 m oder 33 Fahr-Sekunden.

Jeder Marker an einem Ortungspunkt erfasst und speichert die Zeit der Vorbeifahrt jedes Fahrzeugs und meldet diese Zeit an Marker von davorliegenden Ortungspunkten. Dort werden sie gespeichert. Nachfolgende Fahrzeuge rufen diese Zeiten ab und können damit die zeitlichen Abstände zu vorausfahrenden Fahrzeugen ermitteln.

Wenn die Differenz dieser Zeiten den erforderlichen zeitlichen Sicherheitsabstand unterschreitet, verringern die jeweiligen Fahrzeuge ihre Geschwindigkeit und stellen den erforderlichen zeitlichen Sicherheitsabstand wieder her.

Bei der Abfahrt eines Fahrzeugs werden von der Verkehrs-Zentrale die Soll-Vorbeifahrtzeiten des Fahrzeugs an den Ortungspunkten auf der Route errechnet und den Markern dieser Ortungspunkte übermittelt. Jeder Marker an einem Ortungspunkt vergleicht die Ist-Vorbeifahrtzeit jedes Fahrzeugs mit der von der Verkehrs-Zentrale gemeldeten Soll-Vorbeifahrtzeit.

Wenn dabei Verspätungen erkannt werden, wird dies den Markern davorliegender Ortungspunkte gemeldet. Sie speichern diese Verspätungen und übermitteln die Information nachfolgenden autonomen Fahrzeugen.

Dadurch werden diese - ohne elektronische Sicht - über vorausliegende Hindernisse informiert und können - sofern die Gefährdung noch besteht - an dem vor ihnen liegenden Ortungspunkt rechtzeitig anhalten und dort solange warten, bis das vorausfahrende verspätete Fahrzeug z.B. den vor ihm liegenden Ortungspunkt passiert oder die Fahrbahn verlassen hat.

Dies wird der Verkehrszentrale von den betroffenen Markern auf der Fahrbahn automatisch mitgeteilt. Sie ermittelt sodann die Uhrzeit für eine konfliktfreie Weiterfahrt des wartenden Fahrzeugs und teilt diese dem Fahrzeug mit.

Wenn vom Marker eines Ortungspunktes kritische Verspätungen festgestellt wurden, werden diese nicht nur den Markern davorliegender Ortungspunkte, sondern auch der zuständigen Verkehrs-Zentrale mitgeteilt. Sie kann dadurch solche Verspätungen bei der Festlegung von Routen und Abfahrtzeiten für andere Verkehrswünsche berücksichtigen.

### Navigation

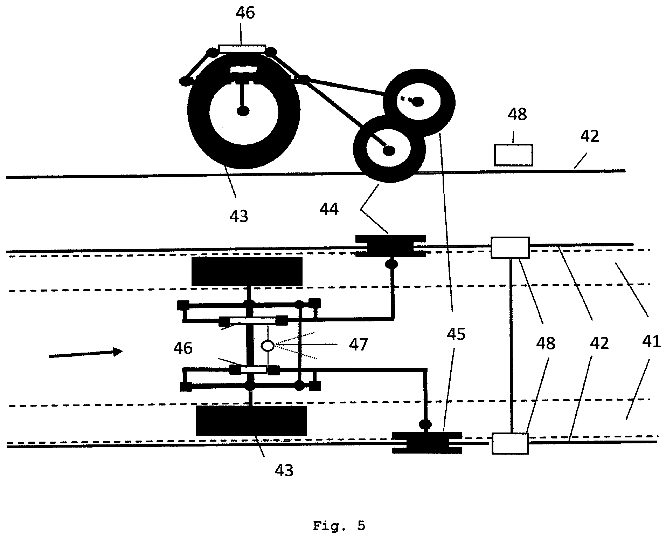

Autonome Fahrzeuge verfügen über linke Spurführungs-Einrichtungen mit denen sie links einer linken Spurführungs-Information folgen können und über rechte Spurführungs-Einrichtungen mit denen sie rechts einer rechten Spurführungs-Information folgen können (Fig. 5).

Für eine sichere Spurführung autonomer Fahrzeuge verfügt die Fahrbahn des vorgeschlagenen Führungs-Systems an den Außenkanten ihrer Fahrbahnbalken über *Spurführungs-Informationen* bzw. *Spurführungs-Schienen.* Sie sind kreuzungsfrei verlegt und deshalb an den dafür erforderlichen Stellen unterbrochen. Diese Stellen sind mit Richtungs-Markern versehen, damit autonome Fahrzeuge ihre Spurführungs-Einrichtungen korrekt einsetzen können.

Bei dem vorgeschlagenen Führungs-System werden Routen auf der Fahrbahn stets durch eine Folge von Richtungs-Anweisungen an Ausfädelungspunkten beschrieben, wie z.B. rechts- links-rechts-links-links. Autonome Fahrzeuge sind dazu für Fahrten auf der Fahrbahn wie folgt programmiert:
- bei *Einfädelungspunkten* am Ort der Zufahrt in eine Fahrbahn bei Rechtsverkehr werden stets die rechten Spurführungs-Einrichtungen und bei Links-Verkehr stets die linken Spurführungs-Einrichtungen eingesetzt,
- bei *Ausfädelungspunkten* werden auf der Fahrbahn je nach Richtungs-Anweisung einer Route die linken oder die rechten Spurführungs-Einrichtungen eingesetzt,
- bei *Richtungspunkten* werden vor der Unterbrechung einer Spurführungs-Information bzw. Spurführungs-Schiene zuerst die der Unterbrechung gegenüberliegende Spurführungs-Einrichtungen eingesetzt und danach erst die Spurführungs-Einrichtungen auf der Seite der Unterbrechung der Spurführungs-Information bzw. Spurführungs-Schiene deaktiviert,
- bei *Störungen* am Fahrzeug oder bei Betätigung einer Stopp-Taste werden bei Rechtsverkehr sofort die rechten Spurführungs-Einrichtungen und bei Links-Verkehr sofort die linken Spurführungs-Einrichtungen eingesetzt und das Fahrzeug verlässt dadurch die Fahrbahn automatisch beim nächsten möglichen Ausfädelungspunkt.

## Patentansprüche

1. Führungs-System zur Erhöhung der Kapazität von Eisenbahn-Trassen, welches umfasst:
eine Verkehrszentrale;
ein Fahrbahnnetz mit Fahrbahnen für autonome Fahrzeuge, wobei dieses aus mit Fahrbahnbalken (41) versehenen Eisenbahn-Trassen, sowie ohne Weichen, Ampeln und Kreuzungen gebildet ist, und mit einem Straßennetz, Parkplätzen, Stationen (H) und Stellplätzen (S) verbunden ist,
Einfädelungspunkte, die eine Zufahrt von dem Straßennetz, den Parkplätzen, Stationen und Stellplätzen auf die Fahrbahnen ermöglichen;
Ausfädelungspunkte, die eine Abfahrt von Fahrbahnen in das Straßennetz, auf die Parkplätze, Stationen und Stellplätze ermöglichen;
auf den Fahrbahnen in einem erforderlichen Bremsabstand der autonomen Fahrzeuge vorgesehene Ortungspunkte,
wobei die Einfädelungspunkte und die Ortungspunkte mit Markern zur Erfassung von Störungen sowie zur Vermeidung von Auffahrunfällen versehen sind, deren Position und Identität von den autonomen Fahrzeugen automatisch erkannt werden können und die ausgestaltet sind, die Zeiten vorbeifahrender Fahrzeuge zu erfassen, zu speichern und anderen Fahrzeugen sowie der Verkehrszentrale mitzuteilen; und
wobei die Verkehrszentrale ausgestaltet ist, an Einfädelungspunkten Slot-Zeiträume für konfliktfreie Vorbeifahrten bereitzustellen, deren Anzahl von einem Geschwindigkeitsunabhängigen zeitlichen Sicherheitsabstand sowie der Länge der Aufbauten und der Geschwindigkeit vorbeifahrender Fahrzeuge abhängt.

2. Führungs-System nach Anspruch 1, wobei,
die Verkehrszentrale ausgestaltet ist, die Zeitdauer für die Durchfahrt von Fahrbahn-Abschnitten zwischen benachbarten Einfädelungspunkten nach betrieblichen Gesichtspunkten festzulegen, so dass diese von autonomen Fahrzeugen eingehalten werden können.

3. Führungs-System nach Anspruch 1, wobei,
die Verkehrszentrale ausgestaltet ist, einen Verkehrswunsch eines Kunden - mit dem Ort der Zufahrt in die Fahrbahn und dem Ort der Abfahrt von der Fahrbahn sowie mit der gewünschten Abfahrtszeit und dem verfügbaren Fahrzeug - zu erfassen, diese die beste Route zwischen Einfahrt und Ausfahrt bestimmt, alle Einfädelungspunkte auf der Route ermittelt und an Hand der gewünschten Abfahrtszeitzeit und der planbaren Durchfahrzeiten zwischen den Einfädelungspunkten die Vorbeifahrtzeiten für alle betroffenen Einfädelungspunkte errechnet.

4. Führungs-System nach Anspruch 3, wobei,
die Verkehrszentrale ausgestaltet ist, zu prüfen, ob alle erforderlichen Slots für Vorbeifahrtzeiten frei sind und falls dies der Fall ist, alle diese Slots solange zu blockieren, bis das Fahrzeug des Kunden die betroffenen Einfädelungspunkte passiert hat und diese Einfädelungspunkte der Verkehrszentrale die jeweiligen Vorbeifahrtzeiten übermittelt haben.

5. Führungs-System nach Anspruch 3, wobei,
die Verkehrszentrale ausgestaltet ist, falls die erforderlichen Slots nicht frei sind, die gewünschte Abfahrtszeit des Kunden solange zu verschieben, bis die jeweilige Fahrt konfliktfrei durchgeführt werden kann.

6. Führungs-System hach Anspruch 5, wobei,
die Verkehrszentrale ausgestaltet ist, falls die gewünschte Abfahrtszeit nicht verschoben werden kann, zu prüfen, ob
- eine andere Route konfliktfrei möglich ist, oder
- die Zahl der verfügbaren Slots erhöht werden kann, oder
- die Zahl der Fahrten verringert werden kann.

7. Führungs-System nach Anspruch 4-6 wobei,
die Verkehrs-Zentrale ausgestaltet ist, die Route, die Abfahrtszeit, den zeitlichen Sicherheitsabstand und die Art des Fahrzeugs für eine gewünschte Fahrt festzulegen, diese Festlegungen dem betroffenen Fahrzeug zu übermitteln und die Fahrt freizugeben.

8. Führungs-System nach Anspruch 1, wobei,
die Verkehrs-Zentrale geeignet ist, auf Basis der Abfahrtszeit eines Fahrzeugs die Soll-Vorbeifahrtzeiten des Fahrzeugs für alle Ortungspunkte auf der Route zu errechnen und den Markern dieser Ortungspunkte mitzuteilen.

9. Führungs-System nach Anspruch 8, wobei,
jeder Marker eines Ortungspunktes ausgestaltet ist, die Ist-Vorbeifahrtzeit jedes Fahrzeugs zu erfassen und zu speichern und mit der - von der Verkehrs- Zentrale gemeldeten - Soll-Vorbeifahrtzeit zu vergleichen; und
weiter ausgestaltet ist, wenn Unterschreitungen des zeitlichen Sicherheitsabstandes festgestellt werden, diese Gefährdung dem Marker eines vorausliegenden Ortungspunktes als "Halt"-Signal und auch der zuständigen Verkehrszentrale zu melden.

10. Führungs-System nach Anspruch 9, wobei,
Marker von Ortungspunkten ausgestaltet sind, autonome Fahrzeuge über ein aktives "Halt"-Signal zu informieren, so dass diese ihre Fahrt sofort unterbrechen und solange warten, bis die Verkehrszentrale feststellt, dass der zeitliche Sicherheits-Abstand zum vorausfahrenden Fahrzeug wiederhergestellt worden ist und die Verkehrszentrale ferner ausgestaltet ist, eine Uhrzeit für die konfliktfreie Weiterfahrt zu bestimmen und diese dem wartenden Fahrzeug mitzuteilen.

11. Führungs-System nach Anspruch 1, wobei,
das System ferner eine linke und rechte Spurführungs-Schiene und/oder eine linke und rechte Spurführungs-Information umfasst, die ausgestaltet sind, autonome Fahrzeuge zu führen, die über Spurführungs-Einrichtungen verfügen, mit denen sie einer linken oder rechten Spurführungs-Information und/oder einer linken oder rechten Spurführungs-Schiene folgen und/oder den linken oder rechten Spurführungs-Informationen entsprechend geführt werden .

12. Führungs-System nach Anspruch 11, wobei,
Routen durch eine Folge von linken bzw. rechten Richtungs-Angaben an den jeweiligen Ausfädelungspunkten der Fahrbahn beschrieben sind, welche von autonomen Fahrzeugen gespeichert und befolgt werden können.

13. Führungs-System nach Anspruch 12, weiter umfassend autonome Fahrzeuge wobei,
die autonomen Fahrzeuge für Fahrten auf der Fahrbahn wie folgt programmiert sind:
bei Einfädelungspunkten am Ort der Zufahrt zu einer Fahrbahn werden bei Rechtsverkehr stets die rechten Spurführungs-Einrichtungen und bei Linksverkehr stets die linken Spurführungs-Einrichtungen eingesetzt,
- bei Ausfädelungspunkten oder Gabelungspunkten werden je nach Richtungs-Anweisungen einer Route die linken oder die rechten Spurführungs-Einrichtungen eingesetzt,
- bei Richtungspunkten vor der Unterbrechung einer Spurführungs-Information und/oder einer Spurführungsschiene werden zuerst die der Unterbrechung gegenüberliegenden Spurführungs-Einrichtungen eingesetzt und erst dann jene Spurführungs-Einrichtungen deaktiviert, die auf der Seite der Unterbrechung der Spurführungs-Information liegen,
- bei Störungen am Fahrzeug oder bei Betätigung einer Stopp-Taste werden bei Rechtsverkehr sofort die rechten Spurführungs-Einrichtungen und
bei Linksverkehr sofort die linken Spurführungs-Einrichtungen eingesetzt , wodurch das Fahrzeug die Fahrbahn automatisch beim nächsten möglichen Ausfädelpunkt verlässt.

## Claims

1. Guidance system for increasing the capacity of railroad tracks, which includes:
a traffic control center;
a roadway network with roadway beams for autonomous vehicles, which is formed from railroad tracks provided with roadway beams (41) and without switches, traffic lights and crossings, and is connected to a road network, parking lots, stations (H) and parking spaces (S),
merging points that allow access from the road network, parking lots, stations and parking spaces to the roadways;
exit points that allow vehicles to exit from the roadways onto the road network, parking lots, stations and parking spaces;
locating points provided on the roadways at a required braking distance from the autonomous vehicles,
wherein the merging points and the locating points are provided with markers for detecting incidents and avoiding rear-end collisions, the position and identity of which can be automatically recognized by the autonomous vehicles and which are designed to record and store the times of passing vehicles and to communicate them to other vehicles and to the traffic control center; and
wherein the traffic control center is configured to provide slot periods at merging points for conflict-free passages, the number of which depends on a speed-independent time safety distance as well as the length of the superstructures and the speed of passing vehicles.

2. Guidance system according to claim 1, wherein,
the traffic control center is configured to determine the time duration for the passage of roadway sections between adjacent merging points according to operational aspects, so that these can be maintained by autonomous vehicles.

3. Guidance system according to claim 1, wherein,
the traffic control center is configured to record a customer's traffic request with the location of the entry into the roadway and the location of the exit from the roadway as well as with the desired departure time and the available vehicle, determines the best route between entry and exit, determines all merging points on the route and calculates the pass-by times for all merging points concerned on the basis of the desired departure time and the plannable passage times between the merging points.

4. Guidance system according to claim 3, wherein,
the traffic control center is configured to check whether all the required slots for pass-by times are free and, if this is the case, to block all these slots until the customer's vehicle has passed the merging points concerned and these merging points have transmitted the respective pass-by times to the traffic control center.

5. Guidance system according to claim 3, wherein,
the traffic control center is configured, if the required slots are not free, to postpone the desired departure time of the customer until the respective journey can be carried out without conflict.

6. Guidance system according to claim 5, wherein,
if the desired departure time cannot be postponed, the traffic control center is configured to check whether
- another route is possible without conflict, or
- the number of available slots can be increased, or
- the number of journeys can be reduced.

7. Guidance system according to claim 4-6 wherein,
the traffic control center is configured to determine the route, the departure time, the time safety distance and the type of vehicle for a desired journey, to transmit these determinations to the vehicle concerned and to release the journey.

8. Guidance system according to claim 1, wherein,
the traffic control center is capable of calculating, on the basis of the departure time of a vehicle, the target pass-by times of the vehicle for all location points on the route and communicating them to the markers of these location points.

9. Guidance system according to claim 8, wherein,
each marker of a tracking point is configured to detect and store the actual pass-by time of each vehicle and to compare it with the target pass-by time reported by the traffic center; and
is further designed to report this hazard to the marker of a preceding location point as a "stop" signal and also to the responsible traffic control center if it is detected that the time safety distance has not been reached.

10. Guidance system according to claim 9, wherein,
markers of locating points are designed to inform autonomous vehicles of an active "stop" signal, so that these vehicles immediately interrupt their journey and wait until the traffic control center determines that the time safety distance to the vehicle in front has been restored, and the traffic control center is also designed to determine a time for the conflict-free continuation of the journey and to communicate this to the waiting vehicle.

11. Guidance system according to claim 1, wherein,
the system further comprises left and right lane guidance rails and/or left and right lane guidance information adapted to guide autonomous vehicles having lane guidance devices with which they follow left or right lane guidance information and/or left or right lane guidance rails, so that the autonomous vehicles follow the left or right lane guidance devices and/or are guided according to the left or right lane guidance information.

12. Guidance system according to claim 11, wherein,
routes are described by a sequence of left-hand or right-hand directional information at the respective exit points of the roadway, which can be stored and followed by autonomous vehicles.

13. Guidance system according to claim 12, further comprising autonomous vehicles wherein,
the autonomous vehicles are programmed to travel on the roadway as follows:
at merging points at the point of access to a roadway, the right-hand lane guidance devices are always used for right-hand traffic and the left-hand lane guidance devices are always used for left-hand traffic,
at exit points or forking points, the left or right lane guidance devices are used depending on the directional instructions of a route,
at direction points before the interruption of a lane guidance information and/or a lane guidance rail, the lane guidance devices opposite the interruption are used first and only then those lane guidance devices on the side of the interruption of the lane guidance information are deactivated,
in the event of faults on the vehicle or when a stop button is pressed, the right-hand lane guidance devices are activated immediately in right-hand traffic and
in the case of left-hand traffic, the left-hand lane guidance devices are used immediately, as a result of which the vehicle automatically leaves the roadway at the next possible exit point.

## Revendications

1. Système de guidage pour augmenter la capacité de voies circulation ferroviaires, qui comprend:
un centre de trafic;
un réseau de voies de circulation avec des poutres de circulation pour véhicules autonomes, ce réseau étant formé de voies de circulation ferroviaires pourvues de poutres de circulation (41), ainsi que sans aiguillages, feux de signalisation et croisements, et étant relié à un réseau routier, des places de stationnement, des stations (H) et des places de stationnement (S),
points d'entrée permettant d'accéder aux voies de circulation à partir du réseau routier, des parkings, des stations et des emplacements;
des points de sortie qui permettent une descente depuis les voies de circulation vers le réseau routier, les parkings, les stations et les emplacements;
des points de localisation prévus sur les voies de circulation à une distance de freinage nécessaire des véhicules autonomes,
les points d'entrée et les points de localisation étant pourvus de marqueurs destinés à détecter les perturbations et à éviter les collisions par l'arrière, dont la position et l'identité peuvent être reconnues automatiquement par les véhicules autonomes et qui sont conçus pour enregistrer les temps de passage des véhicules, les mémoriser et les communiquer aux autres véhicules ainsi qu'au centre de trafic; et
le centre de trafic est conçu pour mettre à disposition, aux points d'entrée, des créneaux horaires pour des passages sans conflit, dont le nombre dépend d'une distance de sécurité temporelle indépendante de la vitesse ainsi que de la longueur des superstructures et de la vitesse des véhicules qui passent.

2. Système de guidage selon la revendication 1, dans lequel,
la centre de trafic est conçue pour fixer la durée de passage de sections de voies de circulation entre des points d'entrée voisins selon des critères d'exploitation, de sorte que les véhicules autonomes puissent la respecter.

3. Système de guidage selon la revendication 1, dans lequel,
la centre de trafic est conçue pour enregistrer un souhait de trafic d'un client, avec le lieu d'accès à la voie de circulation et le lieu de départ de la voie de circulation ainsi qu'avec l'heure de départ souhaitée et le véhicule disponible, celle-ci détermine le meilleur itinéraire entre l'entrée et la sortie, détermine tous les points d'entrée sur l'itinéraire et calcule les temps de passage pour tous les points d'entrée concernés à l'aide de l'heure de départ souhaitée et des temps de passage planifiables entre les points d'entrée.

4. Système de guidage selon la revendication 3, dans lequel,
le centre de trafic est conçu pour vérifier si tous les créneaux nécessaires pour les temps de passage sont libres et, si tel est le cas, pour bloquer tous ces créneaux jusqu'à ce que le véhicule du client ait passé les points d'entrée concernés et que ces points d'entrée aient transmis les temps de passage respectifs au centre de trafic.

5. Système de guidage selon la revendication 3, dans lequel,
si les créneaux nécessaires ne sont pas libres, la centre de trafic est conçue pour décaler l'heure de départ souhaitée du client jusqu'à ce que le trajet concerné puisse être effectué sans conflit.

6. Système de guidage selon la revendication 5, dans lequel ,
le centre de trafic est conçu, si l'heure de départ souhaitée ne peut pas être décalée, pour vérifier si
qu'un autre itinéraire est possible sans conflit, ou
le nombre de créneaux horaires disponibles peut être augmenté, ou
le nombre de trajets peut être réduit.

7. Système de guidage selon les revendications 4 à 6, dans lequel,
le centre de trafic est conçu pour définir l'itinéraire, l'heure de départ, la distance de sécurité temporelle et le type de véhicule pour un trajet souhaité, pour transmettre ces définitions au véhicule concerné et pour autoriser le trajet.

8. Système de guidage selon la revendication 1, dans lequel,
le centre de trafic est apte à calculer, sur la base de l'heure de départ d'un véhicule, les heures de passage théoriques de ce véhicule pour tous les points de localisation sur l'itinéraire et à les communiquer aux marqueurs de ces points de localisation.

9. Système de guidage selon la revendication 8, dans lequel,
chaque marqueur d'un point de localisation est conçu pour enregistrer et mémoriser le temps de passage réel de chaque véhicule et le comparer avec le temps de passage de consigne communiqué par le centre de trafic; et
est en outre conçu, lorsque des dépassements vers le bas de la distance de sécurité temporelle sont constatés, pour signaler ce danger au marqueur d'un point de localisation précédent sous forme de signal « arrêt » et également au centre de trafic compétent.

10. Système de guidage selon la revendication 9, dans lequel,
les marqueurs de points de localisation sont conçus pour informer les véhicules autonomes d'un signal « arrêt » actif, de sorte que ceux-ci interrompent immédiatement leur trajet et attendent jusqu'à ce que la centrale de circulation constate que la distance de sécurité temporelle par rapport au véhicule précédent a été rétablie, et la centrale de circulation est en outre conçue pour déterminer une heure pour la poursuite du trajet sans conflit et pour communiquer cette heure au véhicule qui attend.

11. Système de guidage selon la revendication 1, dans lequel,
le système comprend en outre un rail de guidage gauche et un rail de guidage droit et/ou des informations de guidage gauche et des informations de guidage droit adaptés pour guider des véhicules autonomes disposant de dispositifs de guidage avec lesquels ils suivent des informations de guidage gauche ou des informations de guidage droit et/ou un rail de guidage gauche ou un rail de guidage droit, de sorte que les véhicules autonomes suivent les dispositifs de guidage gauche ou les dispositifs de guidage droit et/ou sont guidés conformément aux informations de guidage gauche ou aux informations de guidage droit.

12. Système de guidage selon la revendication 11, dans lequel,
les itinéraires sont décrits par une séquence d'indications de direction gauche ou droite aux points de sortie respectifs de la voie de circulation, qui peuvent être mémorisées et suivies par les véhicules autonomes.

13. Système de guidage selon la revendication 12, comprenant en outre des véhicules autonomes dans lequel,
les véhicules autonomes sont programmés pour circuler sur la voie de circulation comme suit:
aux points d'entrée à l'endroit de l'accès à une voie de circulation, les dispositifs de guidage de droite sont toujours utilisés pour la circulation à droite et les dispositifs de guidage de gauche sont toujours utilisés pour la circulation à gauche,
aux points de sortie ou aux points de bifurcation, les dispositifs de guidage de gauche ou de droite sont utilisés en fonction des instructions de direction d'un itinéraire,
aux points de direction situés avant l'interruption d'une information de guidage et/ou d'un rail de guidage, les dispositifs de guidage situés à l'opposé de l'interruption sont utilisés en premier lieu et les dispositifs de guidage situés du côté de l'interruption de l'information de guidage ne sont désactivés qu'ensuite,
en cas de dysfonctionnement du véhicule ou d'activation d'un bouton d'arrêt, les dispositifs de guidage de droite sont immédiatement activés en cas de circulation à droite et les dispositifs de guidage de gauche sont activés en cas de circulation à gauche.
en cas de circulation à gauche, les dispositifs de guidage de gauche sont immédiatement utilisés, ce qui permet au véhicule de quitter automatiquement la voie au prochain point de sortie possible.
